# EUROPEAN PATENT SPECIFICATION

(11) **EP 4 194 905 B1**
(45) Date of publication and mention of the grant of the patent: **01.04.2026**
(21) Application number: 22212757.3
(22) Date of filing: 12.12.2022
(51) Int. Cl.: G01D 5/34, F02M 57/00, G01V 8/12, F02M 65/00

(54) **DEVICE TO MEASURE THE MOVEMENT OF A SHUTTER OF AN INJECTOR**
VORRICHTUNG ZUR MESSUNG DER BEWEGUNG EINES VERSCHLUSSES EINES INJEKTORS
DISPOSITIF DE MESURE DU MOUVEMENT D'UN OBTURATEUR D'UN INJECTEUR

(30) Priority: 13.12.2021 IT 202100031166
(43) Date of publication of application: 14.06.2023
(73) Proprietor: AEA S.r.l., 60030 Rosora (AN) (IT)
(72) Inventor: CRISTIANI, Marcello, 40026 IMOLA (BO) (IT); MARIANI, Alessandro, 06022 FOSSATO DI VICO (PG) (IT); RODRIGUEZ VERDUGO, Francisco, 60126 ANCONA (IT); UNGARO, Carmine, 60035 JESI (AN) (IT)
(74) Representative: Studio Torta S.p.A.

(56) References cited:
- DE-A1- 102014 222 288
- DE-A1- 102014 226 435
- IT-A1- RM20 120 507
- AMIRANTE RICCARDO ET AL: "Optical device for measuring the injectors opening in common rail systems", INTERNATIONAL JOURNAL OF AUTOMOTIVE TECHNOLOGY, THE KOREAN SOCIETY OF AUTOMOTIVE ENGINEERS, HEIDELBERG, vol. 18, no. 4, 24 May 2017 (2017-05-24), pages 729 - 742, XP036243667, ISSN: 1229-9138, [retrieved on 20170524], DOI: 10.1007/S12239-017-0072-Y

## Description

### TECHNICAL FIELD

This invention relates to a device to measure the movement of a shutter of an injector.

This invention finds particularly advantageous application in the sector of fuel injectors, to which the following discussion will make explicit reference without any loss of generality thereby.

### BACKGROUND

In the field of measuring the movement of an injector shutter, three types of measuring devices are generally known.

According to a first type, the measuring device comprises a laser triangulation sensor and has some drawbacks mainly deriving from the fact that the laser triangulation sensor requires a relatively large space to carry out laser triangulation and is, therefore, relatively bulk and costly.

According to another of the three known types mentioned above, the measuring device comprises a parasitic current sensor and has some drawbacks mainly deriving from the fact that the parasitic current sensor cannot correctly measure relatively large movements of the shutter and must be arranged at a relatively reduced distance from the shutter itself.

According to the third of the three known types mentioned above, the measuring device comprises a laser vibrometer and has some drawbacks mainly deriving from the fact that the laser vibrometer is relatively costly and entails a relatively long and complex setting-up procedure.

IT RM20 120 507 A1 discloses an optical system for measuring the movement of the moving body of an injector for common rail systems.

The article "Optical device for measuring the injectors opening in common rail systems", Amirante Ricardo et al, International Journal of Automotive Technology, vol. 18, no. 4, 24 May 2017, pages 729-742, also discloses an optical device for measuring the injectors opening in common rail systems.

### SUMMARY

The object of this invention is to provide a device to measure the movement of a shutter of an injector that is free of the drawbacks described above and is simple and cost-effective to produce.

According to this invention, a device to measure the movement of a shutter of an injector is provided, as claimed in the attached claims.

### BRIEF DESCRIPTION OF THE DRAWINGS

This invention will now be described with reference to the attached drawings that illustrate a non-limiting embodiment thereof, in which:
Figure 1 is a schematic perspective view, with parts removed for clarity, of a preferred embodiment of the measuring device of this invention;
Figure 2 is a schematic cross-section, with parts removed for clarity, of the measuring device in Figure 1; and
Figure 3 schematically illustrates the operating principle of the measuring device in Figure 1.

### DESCRIPTION OF EMBODIMENTS

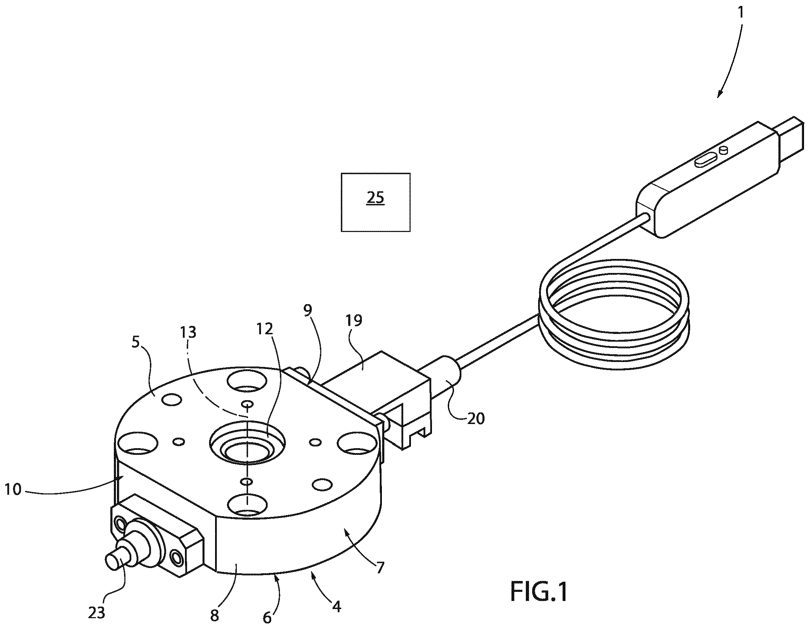

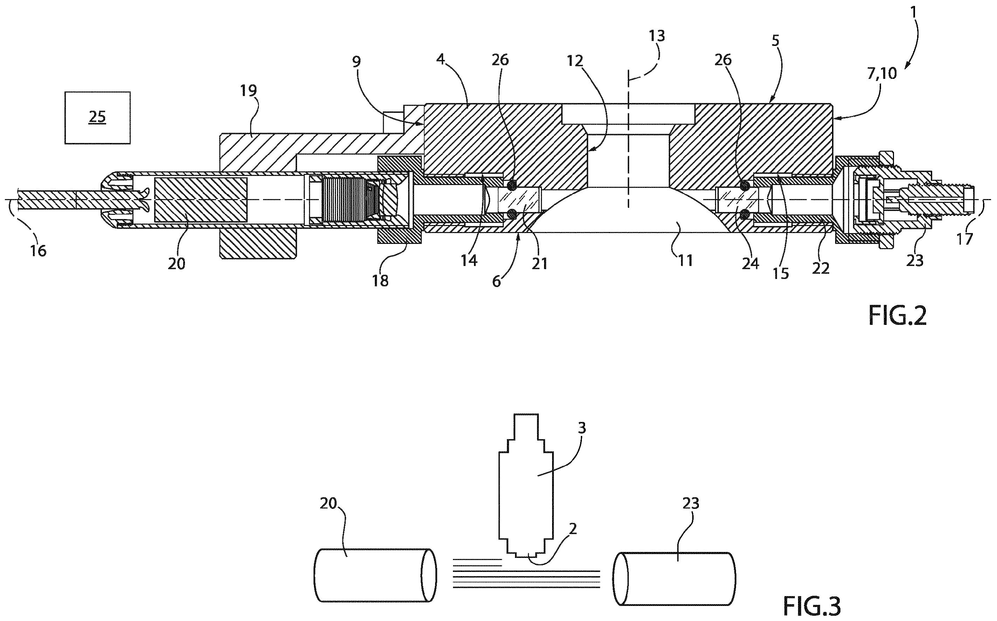

With reference to Figures 1 and 2, reference number 1 indicates, as a whole, a measuring device for measuring the movement of a shutter 2 of an injector 3 (Figure 3), in particular a fuel injector for internal combustion engines (not illustrated).

The measuring device 1 comprises a support block 4, which is delimited by two large faces 5, 6 that are substantially flat and parallel to each other, and is delimited, furthermore, by a lateral outline 7, which extends between the faces 5, 6 and has two curved faces 8 connected together by two flat faces 9, 10.

The block 4 comprises a measuring chamber 11, which opens towards the outside at the face 6; and a pocket 12, which extends between the face 5 and the chamber 11, and has a longitudinal axis 13 that is perpendicular to the faces 5, 6.

The block 4 further comprises two pockets 14, 15, which have corresponding longitudinal axes 16, 17 coinciding with each other and are transverse, in particular perpendicular, to the axis 13, are arranged on opposite sides of the chamber 11, and one of which extends between the face 9 and the chamber 11 and the other between the face 10 and the chamber 11 itself.

The pocket 14 is provided with a support bushing 18, which is screwed into the block 4 coaxially to the axis 16, and cooperates with a bracket 19 protruding from the face 9 to receive and hold a laser emitter 20.

The laser emitter 20 faces the chamber 11 via the interposition of a window 21 made of material that is transparent to the light radiation generated by the laser emitter 20 itself, in this case of glass or plexiglass.

The pocket 15 is provided with a support bushing 22, which is screwed into the block 4 coaxially to the axis 17, and houses a receiver 23 inside that is connected to the laser emitter 20.

The receiver 23 faces the chamber 11 via the interposition of a window 24 made of material that is transparent to the light radiation generated by the laser emitter 20, in this case of glass or plexiglass.

The screwing of the bushings 18, 22 into their respective pockets 14, 15 makes it possible to selectively control the distance between the laser emitter 20 and the receiver 23.

The pocket 12 houses the injector 3 inside so as to enable the shutter 2 to move through the light radiation generated by the laser emitter 20.

The operation of the measuring device 1 will now be described with reference to the Figure 3.

In an initial step for setting up the measuring device 1, necessary to ensure its correct operation irrespective of the machining tolerances of the injector 3 and the pocket 12, the free end of the shutter 2 is arranged inside the light radiation generated by the laser emitter 20 so as to intercept a part thereof and define a starting condition of the measuring device 1.

At the end of the initial, setting-up step, the injector 3 is activated so as to move the shutter 2 between a retracted position and an extracted position, and the light radiation gathered by the receiver 23 decreases proportionally to the movement of the shutter 2 itself.

In this respect, it is useful to specify that the measuring device 1 comprises, in addition, an electronic control unit 25 configured to generate a signal indicating the movement of the shutter 2 depending on the quantity of light gathered by the receiver 23.

The measuring device 1 has some advantages mainly deriving from the fact that the set defined by the laser emitter 20 and the receiver 23 is relatively simple and cost-effective, the pockets 14, 15 make it possible to correctly position the laser emitter 20 and the receiver 23 in relation to each other, and the pocket 12 enables the correct positioning of the injector 3 in relation to the laser emitter 20 and to the receiver 23 itself.

As regards the above, it should, finally, be pointed out that:
the measuring device 1 is configured to be mounted on a piece of equipment (not illustrated) measuring the instantaneous flow rate of the injector 3 so as to measure, at the same time, the instantaneous flow rate of the injector 3 and the movement of the shutter 2; and
the windows 21, 24 are coupled in a fluid-tight manner to the block 4 via the interposition of corresponding seals 26, which enable the installation of the measuring device 1 in a pressurised chamber and to simulate the actual operating conditions of the injector 3 in the internal combustion engine (not illustrated).

## Claims

1. A device to measure the movement of a shutter (2) of an injector (3), the device comprising a laser emitter (20) to generate light radiation; a receiver (23) associated with the laser emitter (20); a housing seat for the injector (3), which is arranged so as to allow the shutter (2) to move through the light radiation generated by the laser emitter (20); a control unit (25), which is configured to generate a signal indicating the movement of the shutter (2) based on the quantity of light radiation generated by the laser emitter (20) and gathered by the receiver (23); and a support block (4), which has a first pocket (12) to house the injector (3), a second pocket (14) to house the laser emitter (20) and a third pocket (15) to house the receiver (23); the first pocket (12) defining the housing seat for the injector (3); and **characterized in that** the support block (4) further has a measuring chamber (11); said first, second and third pocket (12, 14, 15) facing the measuring chamber (11).

2. The measuring device according to claim 1, wherein the laser emitter (20) and the receiver (23) are aligned with one another and face one another.

3. The measuring device according to claim 1 or 2, wherein the laser emitter (20) and the receiver (23) have respective longitudinal axes (16, 17) coinciding with one another.

4. The measuring device according to any one of the preceding claims, wherein said second and third pocket (14, 15) have respective longitudinal axes (16, 17), which are transverse, in particular perpendicular, to a longitudinal axis (13) of the first pocket (12).

5. The measuring device according to any one of the preceding claims, wherein the support block (4) is provided with a first window (21) made of a material that is transparent to the light radiation generated by the laser emitter (20); the first window (21) being mounted between the laser emitter (20) and the measuring chamber (11).

6. The measuring device according to claim 5, wherein the support block (4) is provided with a second window (24) made of a material that is transparent to the light radiation generated by the laser emitter (20); the second window (24) being mounted between the receiver (23) and the measuring chamber (11).

7. The measuring device according to any one of the preceding claims, wherein the shutter (2) is movable between a retracted position and an extracted position; the first pocket (12) being configured to allow the shutter (2), when it is arranged in its retracted position, to project into the light radiation generated by the laser emitter (20).

8. The measuring device according to any one of the preceding claims, wherein said second and third pocket (14, 15) comprise respective support bushings (18, 22), which house, on the inside, the laser emitter (20) and the receiver (23), respectively, and are screwed into the support block (4) in order to selectively control a distance between the laser emitter (20) and the receiver (23).

## Patentansprüche

1. Vorrichtung zum Messen der Bewegung eines Verschlusses (2) eines Injektors (3), wobei die Vorrichtung einen Laseremitter (20) zum Erzeugen von Lichtstrahlung, einen mit dem Laseremitter (20) assoziierten Empfänger (23), einen Gehäusesitz für den Injektor (3), der so angeordnet ist, dass sich der Verschluss (2) durch die vom Laseremitter (20) erzeugte Lichtstrahlung bewegen kann; eine Steuereinheit (25), die so konfiguriert ist, dass sie ein Signal erzeugt, das die Bewegung des Verschlusses (2) basierend auf der vom Laseremitter (20) erzeugten und vom Empfänger (23) gesammelten Lichtstrahlungsmenge anzeigt; und einen Träger (4), der eine erste Tasche (12) zum Gehäuse des Injektors (3), eine zweite Tasche (14) zum Gehäuse des Laseremitters (20) und eine dritte Tasche (15) zum Gehäuse des Empfängers (23) umfasst; wobei die erste Tasche (12) den Gehäusesitz für den Injektor (3) definiert; und **dadurch gekennzeichnet ist, dass** der Träger (4) ferner eine Messkammer (11) aufweist; wobei die erste, zweite und dritte Tasche (12, 14, 15) der Messkammer (11) zugewandt sind.

2. Messvorrichtung nach Anspruch 1, wobei der Laseremitter (20) und der Empfänger (23) zueinander ausgerichtet und einander zugewandt sind.

3. Messvorrichtung nach Anspruch 1 oder 2, wobei der Laseremitter (20) und der Empfänger (23) jeweils miteinander zusammenfallende Längsachsen (16, 17) aufweisen.

4. Messvorrichtung nach einem der vorhergehenden Ansprüche, wobei die zweite und dritte Tasche (14, 15) jeweilige Längsachsen (16, 17) aufweisen, die quer, insbesondere senkrecht, zu einer Längsachse (13) der ersten Tasche (12) verlaufen.

5. Messvorrichtung nach einem der vorhergehenden Ansprüche, wobei der Trägerblock (4) mit einem ersten Fenster (21) bereitgestellt ist, das aus einem Material besteht, das für die vom Laseremitter (20) erzeugte Lichtstrahlung transparent ist; wobei das erste Fenster (21) zwischen dem Laseremitter (20) und der Messkammer (11) montiert ist.

6. Messvorrichtung nach Anspruch 5, wobei der Trägerblock (4) mit einem zweiten Fenster (24) aus einem Material bereitgestellt ist, das für die vom Laseremitter (20) erzeugte Lichtstrahlung transparent ist; wobei das zweite Fenster (24) zwischen dem Empfänger (23) und der Messkammer (11) angebracht ist.

7. Messvorrichtung nach einem der vorhergehenden Ansprüche, wobei der Verschluss (2) zwischen einer eingefahrenen und einer ausgefahrenen Position beweglich ist; die erste Tasche (12) so konfiguriert ist, dass der Verschluss (2), wenn er in seiner eingefahrenen Position angeordnet ist, in die vom Laseremitter (20) erzeugte Lichtstrahlung hineinragt.

8. Messvorrichtung nach einem der vorhergehenden Ansprüche, wobei die zweite und dritte Tasche (14, 15) jeweils Trägerbuchsen (18, 22) umfassen, die auf der Innenseite den Laseremitter (20) bzw. den Empfänger (23) aufnehmen und in den Trägerblock (4) geschraubt sind, um einen Abstand zwischen dem Laseremitter (20) und dem Empfänger (23) selektiv zu steuern.

## Revendications

1. Dispositif de mesure du mouvement d'un obturateur (2) d'un injecteur (3), le dispositif comprenant un émetteur laser (20) pour générer un rayonnement lumineux ; un récepteur (23) associé à l'émetteur laser (20) ; un siège de logement pour l'injecteur (3), qui est disposé de manière à permettre à l'obturateur (2) de se déplacer à travers le rayonnement lumineux généré par l'émetteur laser (20) ; une unité de commande (25) étant configurée pour générer un signal indiquant le mouvement de l'obturateur (2) sur la base de la quantité de rayonnement lumineux généré par l'émetteur laser (20) et recueilli par le récepteur (23) ; et un bloc de support (4), qui comporte une première poche (12) pour loger l'injecteur (3), une deuxième poche (14) pour loger l'émetteur laser (20) et une troisième poche (15) pour loger le récepteur (23) ; la première poche (12) définissant le siège logement de l'injecteur (3) ; et **caractérisé en ce que** le bloc de support (4) comporte en outre une chambre de mesure (11) ; lesdites première, deuxième et troisième poches (12, 14, 15) faisant face à la chambre de mesure (11).

2. Dispositif de mesure selon la revendication 1, l'émetteur laser (20) et le récepteur (23) étant alignés l'un par rapport à l'autre et se faisant face.

3. Dispositif de mesure selon la revendication 1 ou 2, l'émetteur laser (20) et le récepteur (23) présentant des axes longitudinaux respectifs (16, 17) coïncidant l'un avec l'autre.

4. Dispositif de mesure selon l'une quelconque des revendications précédentes, lesdites deuxième et troisième poches (14, 15) présentant des axes longitudinaux respectifs (16, 17) qui sont transversaux, en particulier perpendiculaires, à un axe longitudinal (13) de la première poche (12).

5. Dispositif de mesure selon l'une quelconque des revendications précédentes, le bloc de support (4) étant pourvu d'une première fenêtre (21) constituée d'un matériau étant transparent au rayonnement lumineux généré par l'émetteur laser (20) ; la première fenêtre (21) étant montée entre l'émetteur laser (20) et la chambre de mesure (11).

6. Dispositif de mesure selon la revendication 5, le bloc de support (4) étant pourvu d'une seconde fenêtre (24) constituée d'un matériau étant transparent au rayonnement lumineux généré par l'émetteur laser (20) ; la seconde fenêtre (24) étant montée entre le récepteur (23) et la chambre de mesure (11).

7. Dispositif de mesure selon l'une quelconque des revendications précédentes, l'obturateur (2) étant mobile entre une position rétractée et une position extraite ; la première poche (12) étant configurée pour permettre à l'obturateur (2), lorsqu'il est disposé dans sa position rétractée, de faire saillie dans le rayonnement lumineux généré par l'émetteur laser (20).

8. Dispositif de mesure selon l'une quelconque des revendications précédentes, lesdites deuxième et troisième poches (14, 15) comprenant des bagues de support respectives (18, 22), qui logent, à l'intérieur, respectivement, l'émetteur laser (20) et le récepteur (23), et sont vissées dans le bloc de support (4) afin de contrôler sélectivement une distance entre l'émetteur laser (20) et le récepteur (23).
